# EUROPEAN PATENT SPECIFICATION

(11) **EP 0 967 003 B1**
(45) Date of publication and mention of the grant of the patent: **14.12.2005**
(21) Application number: 99112114.6
(22) Date of filing: 23.06.1999
(51) Int. Cl.: B01D 53/14, B01D 61/42

(54) **Process and system for exhaust gas treatment**
Verfahren und System zur Behandlung von Abgasen
Procédé et système pour le traitement des gaz d'échappement

(30) Priority: 23.06.1998 JP 17578498; 21.09.1998 JP 26603198; 02.11.1998 JP 31208798; 19.05.1999 JP 13825799
(43) Date of publication of application: 29.12.1999
(73) Proprietor: TAKUMA CO., LTD., Kita-ku Osaka (JP)
(72) Inventor: Kotera, Tamotsu, c/o Takuma Research Center, Takasago, Hyogo (JP); Shinoda, Takaaki, c/o Takuma Co. Ltd., Amagasaki, Hyogo (JP); Osumi, Kazuo, c/o Takuma Co. Ltd., Amagasaki, Hyogo (JP); Ohta, Tomohisa, c/o Takuma Research Center, Takasago, Hyogo (JP); Ichimura, Keiji, c/o Ohara & Co., Ltd., Tokyo (JP); Ogata, Katsuyuki, c/o Ohara & Co., Ltd., Tokyo (JP)
(74) Representative: Viering, Jentschura & Partner

(56) References cited:
- EP-A- 0 286 143
- DE-A- 4 306 104
- DE-A- 19 607 667

## Description

### Technical Field

The present invention relates to processes and systems for treating an exhaust gas and, more particularly, to processes and systems for carrying out deacidification to remove acid gas components from an exhaust gas generated in combustion equipment such as refuse incinerators or in chemical plants.

### Background Art

One of the widely known deacidification processes for removing acid gas components such as HCl and SOx from exhaust gas discharged from a refuse incinerator (e.g., general or industrial waste incinerating plants) is such that acid gas components are scrubbed with water and nentralized to have a pH of 6 to 7 using an alkaline agent such as caustic soda so that the acid gas components can be recovered in the form of salt.

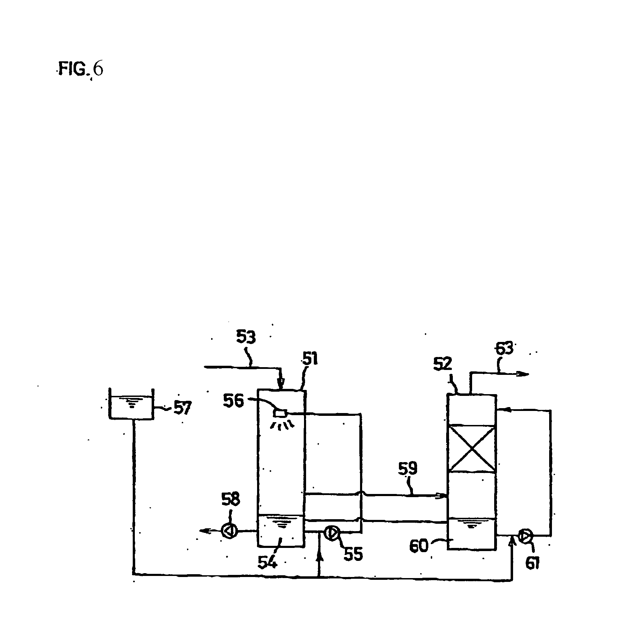

The above conventional process will be described with reference to the system structure shown in FIGURE 6. The conventional system shown in FIGURE 6 is provided with a first spray tower 51 and a second spray tower 52. An exhaust gas from a refuse incinerator (not shown) is introduced into the top of the first spray tower 51 through a flue 53. A. cleaning solvent 54 stored in the lower part of the first spray tower 51 is jetted from a spray nozzle 56 disposed on the upper part of the first spray tower 51, using a circulation pump 55. With this, the acid gas components (e.g., HCl and SOx) contained in the exhaust gas introduced into the first spray tower 51 are absorbed by the cleaning solvent 54. As the cleaning solvent 54 absorbs the acid gas components, its hydrogen ion exponent decreases and therefore caustic soda is supplied into the circulating cleaning solvent 54 from a caustic soda tank 57 thereby maintaining the pH of the cleaning solvent 54 at 6 to 7. The excessive cleaning solvent 54 within the first spray tower 51 is let out of the system by means of a discharge pump 58.

The exhaust gas leaving the first spray tower 51 goes into the second spray tower 52 through a flue 59. The exhaust gas introduced into The second spray tower 52 still contains acid gas components. A cleaning solvent 60 stored in the lower part of the second spray tower 52 is pumped by a circulation pump 61 to the upper part of the second spray tower 52 so that it contacts the exhaust gas (gas-liquid contact) to absorb the remaining acid gas components of the exhaust gas. As the absorption of the acid gas components proceeds, the pH of the cleaning solvent 60 decreases and therefore, caustic soda is introduced, similarly to the first spray tower 51, into the circulating cleaning solvent 60 from the caustic soda tank 57 so that the pH of the cleaning solvent 60 is maintained at 6 to 7. The exhaust gas leaving the second spray tower 52 is released to the atmosphere through a stack, after passing through a flue 63, a gas reheater (not shown) and others. It should be noted that although the first spray tower 51 and the second spray tower 52 are used herein, it is possible to employ other types of spray towers such as the filling type which utilizes a Raschig ring.

The above-described conventional process has, however, revealed the following drawbacks.
(1) Caustic soda is necessary in order to neutralize acid gas components.
(2) The neutralization by use of caustic soda produces salt which cannot be removed by conventional wastewater treatment systems. If the process water is released to a river, it causes salt damage in some districts.
(3) The evaporation to dryness technique is known as a process for recycling product salt, but this technique needs a vast amount of energy.
(4) Bipolar membrane electrodialysis is known as a process for decomposing product salt into acid and alkali for reuse, but this process is not economically feasible because of the use of bipolar membranes. In addition, there are problems in the purity and concentration of decomposed acid and alkali. For these reasons, the process is not widely practically used.
(5) It is conceivable to utilize desalinization by use of RO (Reverse Osmosis) membranes, but the running cost of this process is high and there still remains a problem in the disposal of concentrated salt.

The present invention has been directed to overcoming the foregoing problems and the primary object of the invention is therefore to provide processes and systems for exhaust gas treatment in which neutralization can be carried out with an extremely small amount of an alkaline agent such as caustic soda, the amount of discharged salt can be reduced, and acids of high purity can be recovered for recycling.

DE-96-34 959 discloses a process for continuously obtaining hydrochloride acid with a HCl content of 20-36% by removing HCl from combustion gases.

DE-A-36 11 886 discloses a process for removing! hydrochloride and chlorine from combustion gases, wherein said combustion gas containing HCl and Cl₂ is being absorbed by hydrochloride acid and further by an alkaline solution.

### Disclosure of the Invention

According to a first aspect of the invention (claim 1), there is provided a process for treating an exhaust gas by deacidification to selectively remove HCl gas which is among acid gas components of the exhaust gas, wherein
the HCl gas among the acid gas components is once absorbed by a cleaning solvent having an HCl concentration of 0.04 to 10 wt%; and
HCl is separated and recovered from the cleaning solvent after the HCl gas absorption, by electrodialysis with proton permselective cation exchange membranes.

In the process having said feature of the invention, HCl gas among the acid gas components (such as HCl, SOx) of an exhaust gas is selectively absorbed by a cleaning solvent at the first stage and, at the second stage, the cleaning solvent after the absorption is treated with a proton permselective cation exchange membrane which allows only proton among cations contained in an aqueous solution to permeate therethrough, so that deacidification can be carried out without neutralizing the acid gas components of the exhaust gas. This process provides the benefits that a high-purity hydrochloric acid can be recovered for recycling, that an alkaline agent such as caustic soda for use in neutralization is not necessary for the treatment, and that the amount of discharged salt can be reduced.

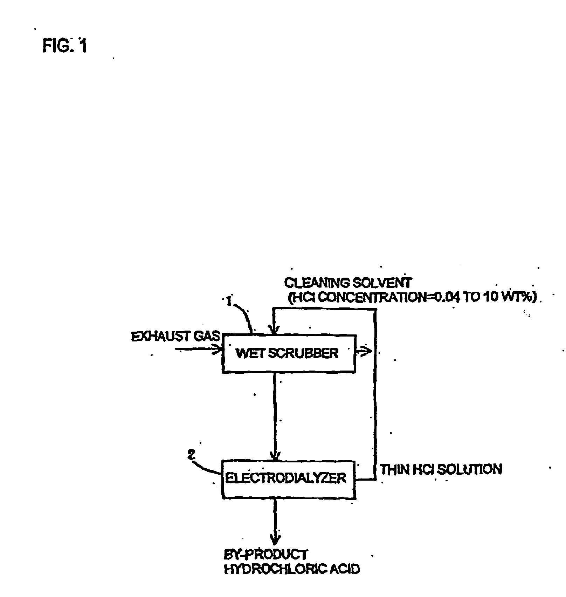

According to a further aspect of the invention (claim 2), there is provided an exhaust gas treatment system which implements the exhaust gas treatment process according to the second aspect. Specifically, this exhaust gas treatment system is designed, as shown in the principle diagram of FIGURE 1, to carry out deacidification by selectively removing HCl gas which is among acid gas components of the exhaust gas, the system comprising: a wet soubber 1 in which HCl gas among the acid gas components is absorbed by a cleaning solvent having an HCl concentration of 0.04 to 10 wt%; and an electrodialyzer 2 into which the cleaning solvent, which is withdrawn from the wet scrubber 1 after absorbing the HCl gas, is introduced. The electrodialyzer 2 comprises section chambers formed by alternately disposed proton permselective cation exchange membranes and anion exchange membranes and is so formed that the cleaning solvent after the absorption of the HCl gas component goes into every second one of the section chambers.

The system having the ninth feature is similar to the system according to the eighth aspect except that the former uses proton pennselective cation exchange membranes in place of the cation exchange membranes. In this system, an exhaust gas enters a wet scrubber 1 where HCl gas which is among the acid gas components (such as HCl, SOx) of the exhaust gas is selectively absorbed by a cleaning solvent. At that time, the HCl concentration of the cleaning solvent in the wet scrubber 1 is controlled to be a certain value, for instance, 0.04 to 10 wt% for the purpose of selectively absorbing HCl gas. Then, the cleaning solvent which has absorbed HCl gas in the wet scrubber 1 is introduced into the electrodialyzer 2. In the electrodialyzer 2, section chambers are formed by proton permselective cation exchange membranes and anion exchange membranes which are alternately disposed. The cleaning solvent after absorbing HCl gas is introduced into every second one of the section chambers where, owing to electrification, H⁺ passes through the proton permselective cation exchange membrane but does not pass through the anion exchange membrane, while cations such as Na⁺, K⁺, Mg²⁺, Ca²⁺ do not pass through the proton permselective cation exchange membrane. Therefore, in every section chamber adjacent to a section chamber into which the cleaning solvent has been introduced, H⁺ which has passed through the proton permselective cation exchange membrane is coupled to Cl⁻ which has passed through the anion exchange membrane so that HCl can be recovered and concentrated. The HCl thus recovered and concentrated can be reused as by-product hydrochloric acid. It should be noted that cations such as Na⁺, K⁺, Mg²⁺, and Ca²⁺ are concentrated in the circulation line for the cleaning solvent and therefore, blown in an adequate manner. In this way, high-purity hydrochloric acid can be recovered, without neutralizing KCl gas contained in the exhaust gas.

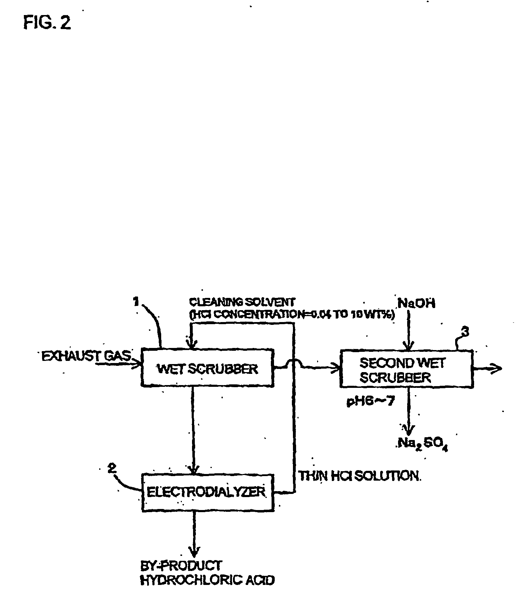

According to a further aspect of the invention (claim 3), as shown in the principle diagram of FIGURE 2, a second wet scrubber 3 is further provided for the exhaust gas treatment system constructed according to the eighth or ninth aspect. The exhaust gas discharged from the wet scrubber 1 is introduced into the second wet scrubber 3, and an alkaline agent such as caustic soda is added to a cleaning solvent used in the second wet scrubber 3. With this arrangement, acid gas components mainly composed of SOx and acid gas components such as HCl gas which has been left after the absorption in the wet scrubber 1 can be thoroughly absorbed.

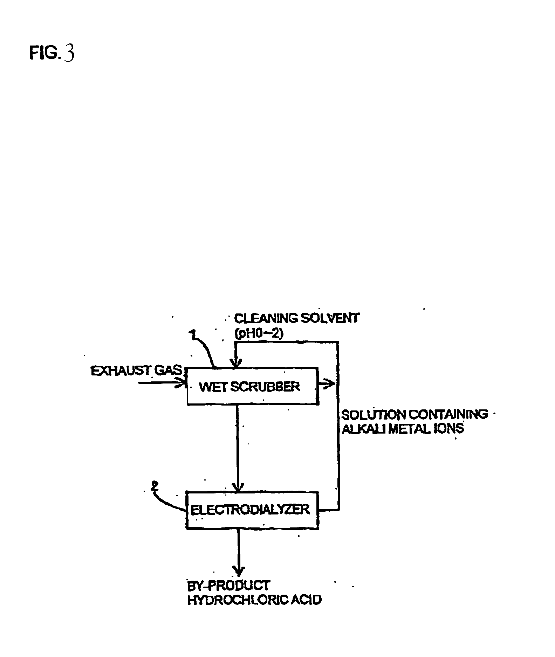

According to another aspect of the invention (claim 4), there is provided an exhaust gas treatment system as shown in Fig. 3, which implements the process according to the fifth aspect. Concretely, this system is designed, to carry out deacidification to selectively remove HCl gas which is among acid gas components of the exhaust gas, the system comprising: a wet scrubber 1 in which the HCl gas among the acid gas components is once absorbed by a cleaning solvent the pH value of which is controlled by an alkaline agent to be 0 to 2; and an electrodialyzer 2 into which the cleaning solvent, which is withdrawn from the wet scrubber 1 after absorbing HCl, is introduced. The electrodialyzer 2 comprises section chambers formed by alternately disposed proton permselective cation exchange membranes and anion exchange membranes and is so formed that the cleaning solvent after the absorption of the HCl gas goes into every second one of the section chambers. Also, the electrodialyzer 2 circulates a remaining solution containing alkali metal ions left after acid separation so that the remaining solution returns to the wet scrubber 1 as a cleaning solvent.

In the system having said feature, an exhaust gas enters the wet scrubber 1 where HCl gas is absorbed by a cleaning solvent the pH value of which is controlled by an alkaline agent to be 0 to 2 and more preferably about 1. Then, the cleaning solvent which has absorbed the HCl gas in the wet scrubber 1 is introduced into the electrodialyzer 2. The electrodialyzer 2 comprises section chambers which are formed by proton permselective cation exchange membranes and anion exchange membranes alternately disposed. The cleaning solvent after absorbing the HCl gas is introduced into every second one of the section chamber where, owing to electrification, H⁺ passes through the proton permselective cation exchange membrane but does not pass through the anion exchange membrane, while cations such as Na⁺, K⁺, Mg²⁺; Ca²⁺ do not pass through the proton permselective cation exchange membrane. Therefore, in every section chamber adjacent to a chamber into which the cleaning solvent has been introduced, H⁺ which has passed through the proton permselective cation exchange membrane is coupled to Cl⁻ which has passed through the anion exchange membrane so that HCl can be recovered and concentrated. The HCl thus recovered and concentrated can be reused as by-product hydrochloric acid.

According to an other aspect of the invention, the exhaust gas treatment systems according to the eighth to seventeenth aspects are applicable to a refuse incinerator.

### Brief Description of the Invention

FIGURE 1 shows the principle of a system constructed according to an aspect of the invention.
FIGURE 2 shows the principle of a system constructed according to a further aspect of the invention.
FIGURE 3 shows the principle of a system constructed according to a further aspect of the invention.
FIGURE 4 shows a system structure of an exhaust gas treatment system constructed according to a embodiment outside the scope of the invention.
FIGURE 5 shows a detailed configuration of an electrodialyzing vessel of the embodiments shown in Figure 4.
FIGURE 6 shows a system structure of a conventional exhaust gas treatment system.

### Best Mode for Carrying out the Invention

Referring now to the accompanying drawings, processes and systems for exhaust gas treatment which embody the present invention will be described.

### (Embodiment outside the scope of the invention)

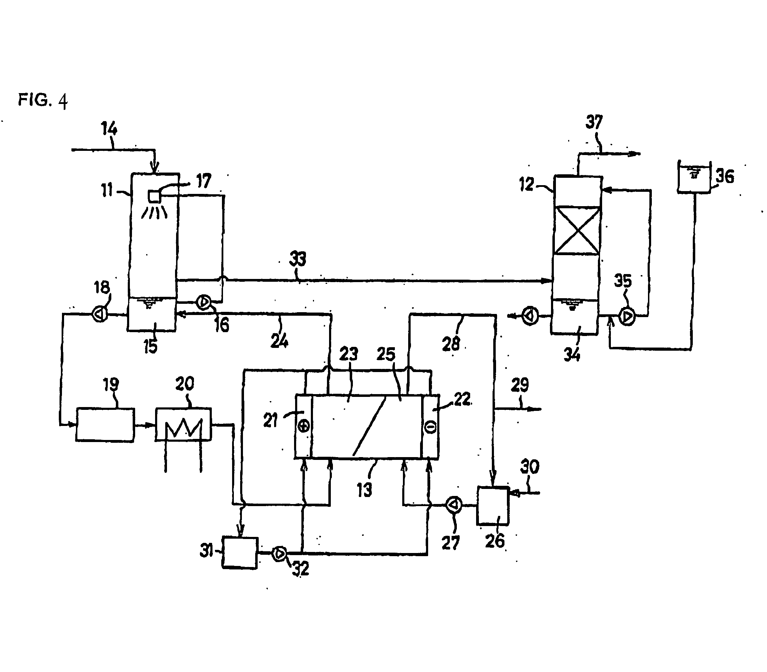

FIGURE 4 shows a system structure of an exhaust gas treatment system outside the scope of the invention.

The exhaust gas treatment system of this embodiment comprises a first spray tower (wet scrubber) 11, a second spray tower (second wet scrubber) 12 and an electrodialyzing vessel (electrodialyzer) 13. Exhaust gas sent from a refuse incinerator (now shown) through a flue 14 is introduced into the first spray tower 11 from its top. A cleaning solvent 15 stored in the lower part of the first spray tower 11 is delivered upward by a circulation pump 16 and jetted through a spray nozzle 17 (disposed at the upper part of the tower 11) within the first spray tower 11, so that the cleaning solvent 15 absorbs HCl gas of the exhaust gas introduced into the first spray tower 11 (it should be noted that SO₂ gas is not absorbed). As the HCl gas absorption proceeds, the HCl concentration of the cleaning solvent 15 increases, and therefore the HCl concentration of the cleaning solvent 15 is controlled by an electrodialyzing vessel 13 (described later) so as to fall within the range of from 0.04 to 10 wt%. The reason why the HCl concentration is limited to the above range is that if the HCl concentration of the cleaning solvent is less than 0.04 wt%, the concentration of the recovered HCl will be low, resulting in poor efficiency, while if the HCl concentration is 10 wt% or more, the rate of HCl gas absorption will considerably decrease. As the acid concentration of the cleaning solvent increases, the cleaning solvent absorbs less SO₂ components and therefore it is possible to withdraw only HCl components.

The cleaning solvent 15 after the absorption of HCl gas is delivered by a pump 18 to a pretreatment system 19 where substances (e.g., solid matters (SS), heavy metals) which could be an obstacle to stable driving of the electrodialyzing vessel 13 are removed. Subsequently, the cleaning solvent 15 is delivered to a water cooler 20 where it is cooled to a temperature of 60°C or less and then delivered to the electrodialyzing vessel 13. Needless to say, there is no problem if the pretreatment system 19 and the water cooler 20 are arranged in opposite order.

The electrodialyzing vessel 13 has an anode 21 and a cathode 22 disposed at the ends thereof respectively. Between these electrodes 21 and 22 are disposed a multiplicity of cation exchange membranes C and anion exchange membranes A (described later) which are alternately arranged. At least one cation exchange membrane C is adjacent to the anode 21 and to the cathode 22. The cleaning solvent, which has passed the pretreatment system 19 and the water cooler 20, goes to a stock solution chamber 23 and then undergoes a treatment in the electrodialyzing vessel 13 so that the HCl concentration of the cleaning solvent 15 decreases. Thereafter, the cleaning solvent 15 returns to the first spray tower 11 by way of a pipe 24.

Meanwhile, a diluted HCl solution is delivered from an HCl tank 26 to a permeation chamber 25 of the electrodialyzing vessel 13 by means of a pump 27. The diluted HCl solution is concentrated by H⁺ ions and Cl⁻ ions which permeate then associated ion exchange membranes from the stock solution chamber 23. The concentrated HCl solution returns to the HCl tank 26 by way of the pipe 28, while a part thereof is extracted as an HCl product from the system through the pipe 29. Pure water in an amount corresponding to the extracting amount of the HCl product is supplied to the HCl tank 26 through a pipe 30.

According to purposes, a neutral salt such as NaNO₃ and Na₂SO₄ or an aqueous solution such as HNO₃ and H₂SO₄ flows to the passage where the flows from the anode 21 and from the cathode 22 contact each other. Such an aqueous solution is stocked in a circulation tank 31, and delivered to the anode side 21 and the cathode side 22 by a pump 32 and return to the circulation tank 31 after leaving the electrodialyzing vessel 13. Each of the anode 21 and the cathode 22 may have its own circulation tank 31 and pump 32.

To absorb acid gas components mainly composed of SOx and acid gas components such as HCl gas which has not been absorbed by the cleaning solvent in the first spray tower 11, the exhaust gas leaving the first spray tower 11 is introduced into the second spray lower 12 through a flue 33. In the second spray tower 12, a cleaning solvent 34 stored in the lower part thereof is delivered upward using a circulation pump 35 so that the cleaning solvent 34 contacts the exhaust gas introduced into the second spray tower 12 to absorb SO₂ gas contained in the exhaust gas and acid gas components (e.g., HCl gas) which have not been absorbed by the cleaning solvent in the first spray tower 11. Meanwhile, an alkaline agent such as caustic soda is fed to the cleaning solvent 34 from a head tank 36, in order to maintain the pH of the cleaning solvent 34 of the second spray tower 12 at 6 to 7. The exhaust gas leaving the second spray tower 12 goes to a gas reheater and to others by way of a pipe 37 and is then released to the atmosphere from a stack (the stack and reheater both are not shown).

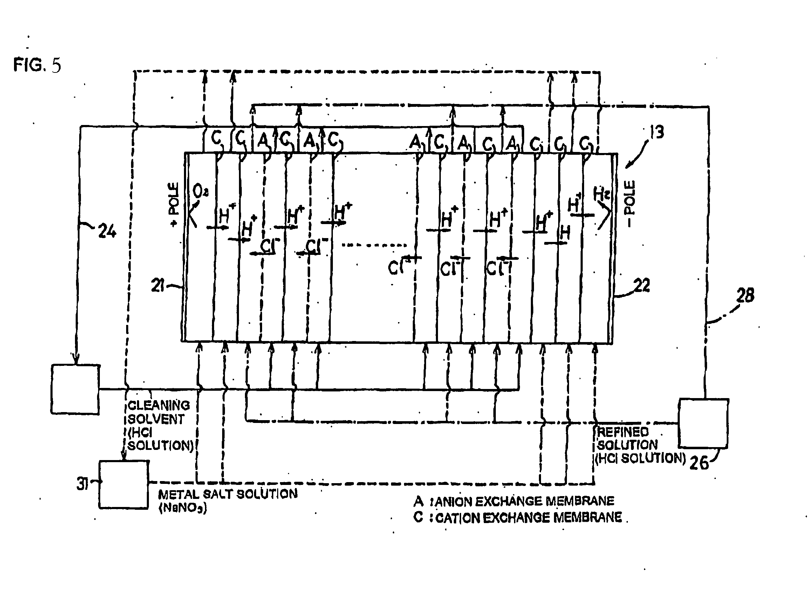

Reference is made to FIGURE 5 to describe the treatment in the electrodialyzing vessel 13 in detail.

The electrodialyzing vessel 13 has a multiplicity of cation exchange membranes C and anion exchange membranes A arranged alternately between the anode 21 and the cathode 22. At least one cation exchange membrane C is stacked on the side adjacent to each of the electrodes 21, 22. With these ion exchange membranes C, A, a number of section chambers are formed. The cleaning solvent (HCl aqueous solution), which has been extracted from the first spray tower 11 and delivered through the pretreatment system 19 and the water cooler 20, is supplied to every second one of the section chambers formed by the cation exchange membranes C and the anion exchange membranes A (this supply is represented by solid line arrows in FIGURE 5). In electrodialysis, the hydrogen ions H⁺ of the HCl aqueous solution pass through the cation exchange membrane C but do not pass through the anion exchange membrane A. Cations such as Na⁺, K⁺, Mg²⁺, Ca²⁺ pass through the cation exchange membrane C, but their amounts are very small. Accordingly, in every section chamber next to a section chamber into which the cleaning solvent has been introduced, a hydrogen ion H⁺ which has passed through the cation exchange membrane C and a chlorine ion Cl⁻ which has passed through the anion exchange membrane. A are coupled to each other, so that HCl is recovered and concentrated. As described earlier, the HCl thus recovered and concentrated is allowed to return to the HCl tank 26 through the pipe 28 as a concentrated HCl solution (this is represented by chain line arrows in FIGURE 5). A metal salt aqueous solution from the circulation tank 31 flows to the passage where the flows from the anode 21 and from the cathode 22 contact each other, as noted earlier (this is represented by broken line arrows in FIGURE 5) so that only oxygen is produced at the anode 21 while only hydrogen being produced at the cathode 22.

In the exhaust gas treatment system constructed according to the first embodiment, HCl of high purity can be recovered for recycling, and the amount of an alkaline agent (e.g., caustic soda) for use in the treatment can be extremely reduced. Additionally, the amount of discharged salt can be minimized and salt damage and other problems which would arise in recycling salt can be solved.

Fly ash from refuse incinerators or ash melting plants contains a large amount of heavy metals. The concentration of these heavy metals to a level usable by heavy metal refiners has recently received much attention and a lot of research effort has been expended in implementing the recovery of heavy metals from fly ash. The process of heavy metal concentration requires a large amount of acid such as HCl. The system disclosed in this embodiment is suitably applicable to heavy, metal concentration as an acid source. When the present system is used in such an application, it encourages heavy metal recycling and, at the same time, enables reuse of HCl solution within the same plant.

### (First Embodiment of the invention)

In said embodiment, proton permselective cation exchange membranes are used in place of the cation exchange membranes used in the electrodialyzing vessel 13 of the embodiment shown in Figure 4. The basic structure of the electrodialyzing vessel 13 according to this of Fig. 4 embodiment does not differ from that of the embodiment and therefore its drawing is omitted herein. The proton permselective, cation exchange membranes used herein are formed such that a thin anion exchange membrane layer is laid over a cation exchange membrane. In order to reduce the thickness of this anion exchange membrane layer to a considerable extent compared to conventional ones, a polymer of solvent-soluble type formable into a thin membrane is used and an anion exchange polymer having a skeleton structure of polysulfone and soluble in a solvent is used as the anion exchange membrane layer (see pp.51 to 58, "sulfuric acid and industry" issued in April, 1996).

In the above arrangement, when the cleaning solvent which has absorbed HCl gas in the first spray tower 11 is introduced into every second one of the section chambers of the electrodialyzing vessel 13, electrodialysis is carried out in the electrodialyzing vessel 13 in such a way that the hydrogen ions H⁺ of the HCl aqueous solution pass through the proton permselective cation exchange membrane C but do not pass through the anion exchange membrane A while cations such as Na⁺, K⁺, Mg²⁺ and Ca²⁺ do not pass through the proton permselective cation exchange membrane C. In every section chamber adjacent to a section chamber into which the cleaning solvent has been introduced, a hydrogen ion H⁺ which has passed through the proton permselective cation exchange membrane C is coupled to a chlorine ion Cl⁻ which has passed through the anion exchange membrane A, so that HCl is recovered and concentrated. The HCl thus recovered and concentrated returns to the HCl tank 26 through the pipe 28 as a concentrated HCl solution. Cations such as Na⁺, K⁺, Mg²⁺, and Ca²⁺ are concentrated in the circulation line for the cleaning solvent and therefore, blown in an adequate manner. A metal aqueous solution flows from the circulation tank 31 to the passage where the flows from the anode 21 and from the cathode 22 contact each other. Therefore, only oxygen is produced at the anode 21 while only hydrogen being produced at the cathode 22.

### (Second Embodiment of the invention)

Said embodiment is intended for absorption of an exhaust gas by use of a cleaning solvent to which an alkaline agent is added. This embodiment is designed to separate and recover, HCl by electrodialysis which utilizes proton permselective cation exchange membranes and to circulate a remaining solution for use in absorption of HCl gas.

In said embodiment, a system similar to that of the embodiment shown in FIGURE 4 is used and an exhaust gas mainly composed of HCl gas is introduced into the first splay tower 11 through the fine 14. The pH value of the cleaning solvent 15 in the first spray tower 11 is adjusted to 0 to 2 and more preferably to about 1, using an alkaline agent. Therefore, HCl gas contained in the exhaust gas can be effectively absorbed by the cleaning solvent, forming NaCl. The cleaning solvent 15 which has absorbed HCl gas in the first spray tower 11 enters the stock solution chamber 23 of the electrodialyzing vessel 13 where hydrogen ions H⁺ permeate the proton permselective cation exchange membrane C while Cl⁻ permeates the anion exchange membrane A so that these ions enter the permeation chamber 25. In this way, HCl is extracted and concentrated. The concentrated HCl is extremely high in purity and therefore easy to reuse.

After HCl is separated from the cleaning solvent 15 of the first spray tower 11 in the electrodialyzing vessel 13, a remaining solution containing alkali metal ions is circulated for reuse and the pH value of the remaining solution is adjusted to 0 to 2 and more preferably to about 1. With this arrangement, the ion concentration of the cleaning solvent 15 increases together with the plant efficiency of the electrodialyzing vessel 13.

While the exhaust gas treatment systems of the foregoing embodiments have been described when applied to a refuse incinerating plant, the present invention is applicable to separation of acid gas components from a gas generated in industrial waste plants or other combustion equipment, or in chemical plants.

The treatment processes of the foregoing embodiments are applicable not only to purification of HCl and H₂SO₄ but also to purification and recovery of HNO₃ and other acids. They are also applicable to removal of various cations.

## Claims

1. A process for treating an exhaust gas by deacidification to selectively remove HCl gas which is among acid gas components of the exhaust gas, wherein
the HCl gas among the acid gas components is once absorbed by a cleaning solvent having an HCl concentration of 0.04 to 10 wt%; and
HCl is separated, concentrated and recovered from the cleaning solvent after the HCl gas absorption, by electrodialysis with proton permselective cation exchange membranes.

2. A system for treating an exhaust gas by deacidification to selectively remove HCl gas which is among acid gas components of the exhaust gas,
the system comprising:
a wet scrubber in which the HCl gas among the acid gas components is absorbed by a cleaning solvent having an HCl concentration of 0.04 to 10 wt%; and
an electrodialyzer into which the cleaning solvent, which is withdrawn from the wet scrubber after absorbing the HCl gas is introduced,
the electrodialyzer comprising section chambers which are formed by alternately disposed proton permselective cation exchange membranes and anion exchange membranes and being so formed that the cleaning solvent after the absorption of the HCl gas goes into every second one of the section chambers.

3. A system for treating an exhaust gas according to claim 2 further comprising a second wet scrubber into which the exhaust gas discharged from said wet scrubber is introduced, wherein an alkaline agent is added to a cleaning solvent used in the second wet scrubber.

4. A system for treating an exhaust gas by deacidification to selectively remove HCl gas which is among acid gas components of the exhaust gas,
the system comprising:
a wet scrubber in which the HCl gas among the acid gas components is once absorbed by a cleaning solvent the pH value of which is controlled by an alkaline agent to be 0 to 2; and
an electrodialyzer into which the cleaning solvent, which is withdrawn from the wet scrubber after absorbing the HCl gas, is introduced;
said electrodialyzer comprising section chambers which are formed by alternately disposed proton permselective cation exchange membranes and anion exchange membranes, being formed such that the cleaning solvent after the absorption of the HCl gas goes into every second one of the section chambers, and circulating a remaining solution containing alkali metal ions left after acid separation so that the remaining solution returns to the wet scrubber as a cleaning solvent.

5. A system for treating an exhaust gas according to any one of claims 2, 3 and 4, which is employed in a refuse incinerator.

## Patentansprüche

1. Ein Verfahren zur Behandlung eines Abgases durch Entsäuerung, um gezielt HCl-Gas, das sich unter den sauren Gasbestandteilen des Abgases befindet, zu entfernen, wobei
das HCl-Gas unter den sauren Gasbestandteilen mittels eines Reinigungslösungsmittels, das eine HCl-Konzentration von 0,04 bis 10 Gew.-% besitzt, absorbiert wird; und
HCl nach der HCl-Gas-Absorption abgetrennt, konzentriert und aus dem Reinigungslösungsmittel durch Elektrodialyse mit Proton-permselektiven Kationenaustauschmembranen wiedergewonnen wird.

2. Ein System zur Behandlung eines Abgases durch Entsäuerung, um gezielt HCl-Gas, das sich unter den sauren Gasbestandteilen des Abgases befindet, zu entfernen, wobei das System umfasst
einen Nasswascher, in dem das HCl-Gas unter den sauren Gasbestandteilen mittels eines Reinigungslösungsmittels, das eine HCl-Konzentration von 0,04 bis 10 Gew.-% besitzt, absorbiert wird; und
einen Elektrodialysator, in den das Reinigungslösungsmittel, das nach dem Absorbieren des HCl-Gases aus dem Nasswascher abgezogen wird, eingebracht wird,
wobei der Elektrodialysator Trennkammern umfasst, die durch abwechselnd angeordnete Proton-permselektive Kationenaustauschermembranen und Anionenaustauschermembranen ausgebildet sind und die so ausgebildet sind, dass das Reinigungslösungsmittel nach der Absorption des HCl-Gases in jede zweite der Trennkammern gelangt.

3. Ein System zur Behandlung eines Abgases gemäß Anspruch 2, das ferner einen zweiten Nasswascher umfasst, in den das Abgas, das von dem Nasswascher abgegeben wird, eingeleitet wird, wobei dem Reinigungslösungsmittel, das in dem zweiten Nasswascher verwendet wird, ein alkalisches Agens zugesetzt wird.

4. Ein System zur Behandlung eines Abgases durch Entsäuerung, um gezielt HCl-Gas, das sich unter den sauren Gasbestandteilen des Abgases befindet, zu entfernen, wobei das System umfasst:
einen Nasswascher, in dem das HCl-Gas unter den sauren Gasbestandteilen durch ein Reinigungslösungsmittel, dessen pH-Wert durch ein alkalisches Agens auf 0 bis 2 geregelt wird, absorbiert wird; und
einen Elektrodialysator, in den das Reinigungslösungsmittel, das nach dem Absorbieren des HCl-Gases aus dem Nasswascher abgezogen wird, eingebracht wird,
wobei der Elektrodialysator Trennkammern umfasst, die durch abwechselnd angeordnete Proton-permselektive Kationenaustauschermembranen und Anionenaustauschermembranen ausgebildet sind und die so ausgebildet sind, dass das Reinigungslösungsmittel nach der Absorption des HCl-Gases in jede zweite der Trennkammern gelangt, und eine verbleibende Lösung, die die nach der Säureabtrennung verbleibenden Alkalimetallionen enthält, zirkuliert, so dass die verbleibende Lösung zu dem Nasswascher als Reinigungslösungsmittel zurückkehrt.

5. Ein System zur Behandlung eines Abgases gemäß einem der Ansprüche 2, 3 und 4, das in einer Müllverbrennungsanlage eingesetzt wird.

## Revendications

1. Procédé pour le traitement des gaz d'échappement par désacidification pour extraire de manière sélective le gaz HCl faisant partie des composants de gaz acide des gaz d'échappement, **caractérisé en ce que**
le gaz HCl parmi les composants de gaz acide est absorbé une fois par un solvant nettoyant ayant une concentration en HCl de 0,04 à 10% en poids ; et **en ce que**
le HCl est séparé, concentré et récupéré par le solvant nettoyant après l'absorption du gaz HCl par électrodialyse avec des membranes d'échange de cation perméables de manière sélective aux protons.

2. Système pour le traitement des gaz d'échappement par désacidification pour extraire de manière sélective le gaz HCl faisant partie des composants de gaz acide des gaz d'échappement,
le système comprenant :
un bac de lavage des gaz dans lequel le gaz HCl faisant partie des composants de gaz acide est absorbé par un solvant nettoyant ayant une concentration en HCl de 0,04 à 10 % en poids ; et
un dispositif d'électrodialyse dans lequel est introduit le solvant nettoyant extrait du bac de lavage des gaz après l'absorption du gaz HCl,
le dispositif d'électrodialyse comprenant des chambres de section formées par des membranes d'échange de cation perméables de manière sélective aux protons et des membranes d'échange d'anion disposées en alternance et étant formé de manière à ce que le solvant nettoyant après l'absorption du gaz HCl entre dans une chambre de section sur deux.

3. Système pour le traitement des gaz d'échappement selon la revendication 2 comprenant de plus un deuxième bac de lavage des gaz dans lequel sont introduits les gaz d'échappement évacués dudit bac de lavage des gaz, **caractérisé en ce qu'**un agent alcalin est ajouté à un solvant nettoyant utilisé dans le deuxième bac de lavage des gaz.

4. Système pour le traitement des gaz d'échappement par désacidification pour extraire de manière sélective le gaz HCl faisant partie des composants de gaz acide des gaz d'échappement,
le système comprenant :
un bac de lavage des gaz dans lequel le gaz HCl faisant partie des composants de gaz acide est absorbé une fois par un solvant nettoyant dont la valeur de pH est contrôlée par un agent alcalin de manière à être comprise entre 0 et 2 ; et
un dispositif d'électrodialyse dans lequel est introduit le solvant nettoyant extrait du bac de lavage des gaz après l'absorption du gaz HCl,
ledit dispositif d'électrodialyse comprenant des chambres de section formées en plaçant en alternance des membranes d'échange de cation perméables de manière sélective aux protons et des membranes d'échange d'anion, étant formé de manière à ce que le solvant nettoyant après l'absorption du gaz HCl entre dans une chambre de section sur deux et faisant circuler une solution restante contenant des ions métalliques alcalins laissés après une séparation acide de sorte que la solution restante revient au bac de lavage des gaz en tant que solvant nettoyant.

5. Système pour le traitement des gaz d'échappement suivant l'une quelconque des revendications 2, 3 et 4 qui est employé dans une unité de combustion des ordures ménagères.
